# EUROPEAN PATENT SPECIFICATION

(11) **EP 1 126 761 B1**
(45) Date of publication and mention of the grant of the patent: **16.08.2006**
(21) Application number: 99948728.3
(22) Date of filing: 15.10.1999
(51) Int. Cl.: A23K 1/00, A23K 1/16

(54) **METHOD FOR THE MIXING OF A VITAMIN PREMIX FOR THE PRODUCTION OF FEED**
VERFAHREN ZUM MISCHENS EINER VITAMINVORMISCHUNG ZUR HERSTELLUNG EINES FUTTERMITTELS
PROCEDE DE PRODUCTION D'UN PRE-MELANGE DE VITAMINES POUR LA PRODUCTION DE MATIERES FOURRAGERES

(30) Priority: 04.11.1998 DK 142298; 18.01.1999 DK 5599
(43) Date of publication of application: 29.08.2001
(73) Proprietor: Trouw Nutrition Denmark A/S, 6600 Vejen (DK)
(72) Inventor: DUER, Victor, DK-3500 Værløse (DK)
(74) Representative: Larsen, Hans Ole
(86) International application number: PCT/DK1999/000559
(87) International publication number: WO 2000/025599

(56) References cited:
- EP-A2- 0 231 817
- EP-A2- 0 682 874
- EP-A2- 0 689 834
- WO-A1-98/47389
- ES-A1- 2 033 571
- GB-A- 1 457 643
- DATABASE WPI Week 199744, Derwent Publications Ltd., London, GB; AN 1997-478201, XP002945131 'Preparation of Granulated Premix for Cattle from Copper-Carboxymethyl Cellulose Complex and Potassium Iodide, Mixed with Bran, by Granulation, Encapsulation and Drying' & RU 2 075 946 C1 (NIVA TATARSTANA RES PRODN ASSOC) 27 March 1997

## Description

The invention concerns a method for the mixing of a vitamin premix for the production of animal feed pellets with the addition of said premix, where the premix is a vitamin premix comprising fat/oil- and water-soluble vitamins, where the feed pellets are sprayed with the vitamin premix, and where the pellets are subjected to cooling before being sprayed.

EP-A-231817 describes a method of production of pellets for animal or human food, where vitamins and similar substances are sprinkled onto the finished pellets, and where the pellets are cooled before the vitamins are sprayed on the surface of the pellets. ES 2033571 describes a similar technique, related to animal feed supplement production. Granules are made in a spray tower and then cooled to 35 degree C. The cooled granules are sprayed with a vitamin complex, which remains fixed to the surface of the granules.

The vitamin spray is a complex consisting of different vitamins and other health-promoting additives.

It is the object of the present invention to provide a method for the mixing of the vitamin premix which is used during the spraying onto the finished pellets of the above-mentioned kind, where the vitamin premix comprises fat/oil water-soluble vitamins, where the possibility is achieved of adding greater amounts of vitamin B₂s, such as riboflavin, compared to the above mentioned vitamin spray.

This object is achieved by a method, as disclosed in claim 1, where the water phase for the water-soluble vitamins comprises a mix of propylene glycol and EDTA and nicotinamide, or carbamide/urea, after which a vitamin B₂, such as riboflavin, is added, and thereafter sodium hydrochloride (NaOH).

With such a premix comprising the above-mentioned components, the possibility is provided of dissolving the riboflavin, which is important in that the riboflavin is not only advantageous from the point of view of cost, but also necessary to use as B₂ vitamin if phytase enzyme is to be added later.

By using the urea/carbamide in the premix before adding the riboflavin, it is possible to add even greater amounts of riboflavin, as the solubility of the riboflavin is ensured and increased by the presence of urea/carbamide.

By providing a method according to the invention and as further disclosed in claim 2, a reduction in the pH is achieved, so that the added riboflavin or sodium riboflavin phosphate is not ruined by the high pH which is established by the addition of sodium hydroxide (NaOH).

By providing a method according to the invention and as further disclosed in claim 3, an expedient composition of the oil phase is achieved.

By providing a method according to the invention and as further disclosed in claim 4, a homogenous substance of the premix is achieved during stirring.

It is expedient, as disclosed in claim 5, to add a phytase enzyme to the vitamin premix at a temperature of 20-30°C, which temperature in the premix can be achieved by the addition of cold water before the addition of the phytase.

The invention will be explained in more detail with reference to the following example:

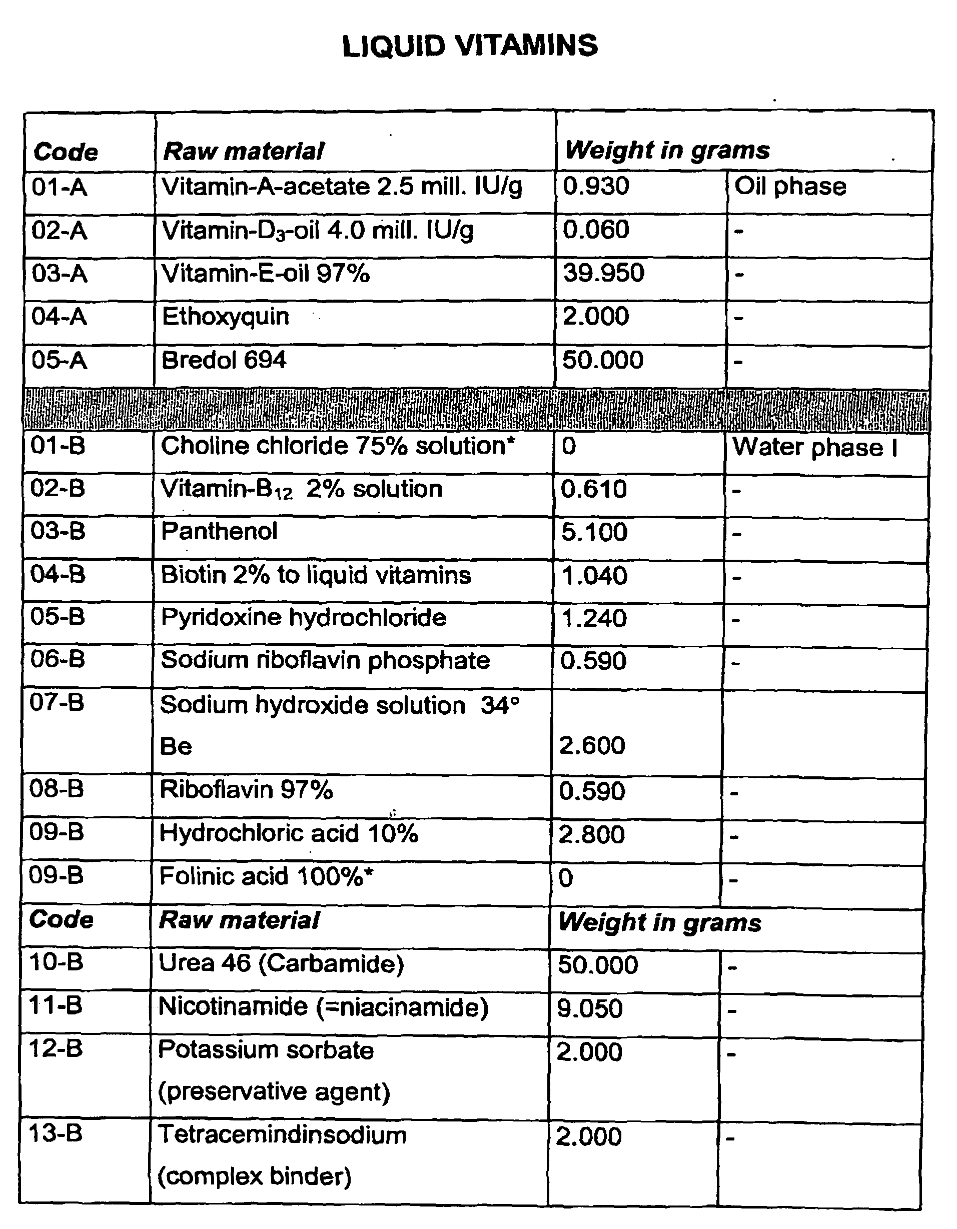

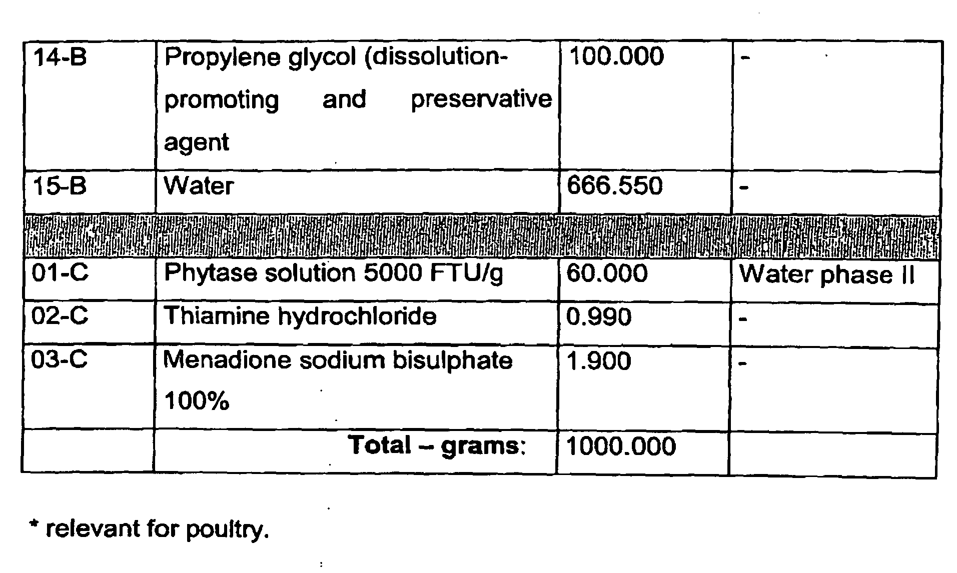

Before the 07 base is added, the pH is approx. 6, after which the base addition results in a pH increase to approx. 10-11, which is necessary in order for the riboflavin (08) to be dissolved. Component 09 is then added to effect a reduction of the pH to around 8, in that the substance 08 is ruined by a pH which is too high. By carrying out a mixing as described, it is achieved that all vitamins are present in the desired concentrations, and without destruction of these taking place.

Generally, the carbamide weight percentage interval of the total amount will lie in the interval 2-10%, mainly around 5%.

If the sodium riboflavin phosphate is omitted, the necessary amount of carbamide in the example will increase to 50-60 grams in order to ensure the solubility of the riboflavin.

The solution itself consisting of both water-soluble as well as oil-soluble vitamins is subsequently sprayed on the feed pellets for animals. This spraying can be effected before the pellets are stored in silos, or spraying can be effected when the pellets are loaded into transport containers. Both solutions enable a differentiation to be made between the different animals, e.g. pigs vs. chickens, and differentiation in accordance with customer requirements.

It has shown surprisingly that when this spraying of the vitamins on the pellets is carried out, no destruction or precipitation of the vitamins occurs, which means that the pellets can be considered to be particularly stable. The reason why no destruction occurs can possibly be that the pellets are stored in silos and containers in which there is a low percentage of oxygen.

### Production principle

The final preparation consists of an oil phase comprising the so-called fat-soluble vitamins mixed up with an adjusted amount of a suitable solubility product - here, use is made of Bredol 694. This mixture, preheated to 55-65°C, is poured/pumped in an adjusted flow down into the water phase containing the water-soluble components and with a temperature set at 40-45°C. The distribution of the oil phase with subsequent dissolution in the water phase, the actual solubilising process, must take place under constant stirring and at a suitably calm pace.

### The mixing procedure

The oil phase (code A): The auxiliary material 05 is added one at a time and in the given sequence, the vitamins 01, 02 and 03 and the antioxidant 04. The components are preheated in order to achieve a suitable consistency for handling. Mixing is effected to uniformity. Hereafter, the mixture will continue to be homogeneous.

The water phase I (code B): Measured amounts of water 15 (preheated to approx. 45°C) are mixed with 14, in which 13, 12, 11 and 10 are dissolved in this order. Thereafter, 08 is added to the mixture ( insoluble in water at this process stage). When the material appears to be distributed uniformly in the water phase, the base 07 is added. Upon conclusion of the dissolution of 08, the acid 09 is added and thereafter 06, 05, 04,03 and 02 one at a time and in this order. The product appears as a slightly opalescent liquid.

Solubilising phase (A ⇒ B): The oil phase A is now pumped in a thin and continuous stream down into the water phase I, which is held in constant movement by the slowly-moving stirring unit. Mixing is effected to uniformity.

Completion (C ⇒ (A + B)) Phytase (01), performed under water phase II, is mixed in, after which 02 and finally 03 are dissolved. The preparation is now ready for use.

In certain cases, the components 02 and 03 can be added in water phase I.

### Comments on the formulation

The phytase must be included as a part of the vitamin mixture. This gives rise to the undesired effect that the content of the otherwise water-soluble sodium riboflavin phosphate, when it exists above a certain concentration, is precipitated as riboflavin. The process, which is irreversible under the conditions determined here, will render the finished product useless. The speed at which the precipitation takes place depends first and foremost on the concentration of said components.

Urea (carbamide) is used here as a solubility-promoting material for riboflavin and is optimised for the respective formulation (model). With dosing of riboflavin below a certain level, it is not always necessary to add urea, in that it can be sufficient here with the declared amount of nicotinamide (= niacinamide). It is otherwise well-known that this vitamin of the B-group similarly possesses solubility-promoting characteristics. When the use of urea is found in the actual context, it will form part with 2-10% related to weight of the total product.

If folinic acid is included in a formulation, this is handled in the same way as riboflavin. The material is normally insoluble in water with neutral pH, but can be dissolved in basic solutions where, however, it is chemically unstable. Both nicotinamide and urea serve to promote solubility.

Urea has been selected for the reason that it exits in an acceptable degree of purity, and at the same time it is found to be reasonably cheap for the purpose. Moreover, no negative stability has been shown with regard to the remaining active material contents, and in the stated concentrations it must be considered to be harmless for internal use.

### Liquid vitamin mixture, sprayed on after pelleting.

In the following discussion of the results from the spraying of liquid vitamin premix on cooled feed pellets, the tests with broilers have been omitted, the reason being that the liquid vitamin premix in these tests was introduced via drinking water. However, technically and from the point of view of nutrition, there is nothing to prevent the spraying of liquid vitamin premixes on poultry feeds and all other pelleted types of feeds.

Preliminary investigations gave rise to a great deal of conjecture concerning the shown vitamin loss in the production of animal feeds, and therefore it was decided to examine whether feed pellets could be sprayed with liquid vitamin premixes after cooling with a better recovery result - and herewith a better correlation between the added vitamin and the vitamin supplied to the animals. Similarly, it was decided to carry out production tests with decreasing dosage of liquid vitamin premix compared with dry vitamin premix, the object being to determine a possible minimum dosage where the animals reacted via their feedstuff utilisation or growth.

In the trial, the highest dosing of liquid premix corresponded to the dosing of dry vitamin premix to the control feed (index 100 corresponding to standard). The dosing of vitamin to the 4 remaining trials mixtures was reduced to following index: 85, 70, 55 and 40. The only difference in the control and trial feed was the premix type and the method of addition.

All mixtures were dosed with 2 kg. per ton feedstuff.

**Table 1. Feeds for porkers. Recovery percentages for vitamins in premixes and pellets at production.**

| | Dry premi x | Feed pellets with dry premix | Liquid premix | Feed pellets with liquid premix |
|---|---|---|---|---|
| Vitamin-A | 79 | 58 | 83 | 77 |
| Vitamin-E | 92 | 68 | 103 | 85 |
| Vitamin-K₃ | 94 | 4 | 82 | 32 |
| Vitamin-B₁ | 60 | 39 | 70 | 82 |
| Vitamin-B₂ | 93 | 74/12 | 101 | 226/72 |
| Vitamin-B₆ | 67 | 33 | 91 | 71 |
| Vitamin-B₁₂ | 42 | 18 | 82 | 63 |
| Niacin | 91 | 48 | 97 | 90 |
| Pantothenic acid | 81 | 57 | 98 | - |
| Biotin | 94 | 40/-19 | 95 | 132/53 |

From Table 1 it will be seen that the recovery percentages for vitamins sprayed on the surface of cooled feed pellets are very much higher than for dry vitamins which have gone through the feed production process. However, it must also be ascertained that the recovery percentages lie below the sprayed-on amounts, with great variation from vitamin to vitamin. The investigation does not clarify the question of whether there is an actual vitamin loss due to chemical reactions upon the contact of the vitamins with the surface of the pellets, or whether an analysis problem is involved.

The vitamins K₃, B₁₂ and biotin had very low recovery percentages after dry addition. With liquid spraying, K₃ and biotin still have low recovery percentages, but nevertheless the recovery is 20 to 25 percentage points higher. For vitamin B₁₂, the recovery is 30 to 40 percentage points higher.

For vitamin B₁, the results indicate a recovery of around 80 percent, which is 35 to 40 percentage points higher than with dry vitamins. The spraying-on of vitamin B₂, B₆ and niacin shows recovery percentages which are 30 to 40 percentage points higher than with the use of dry vitamins. The vitamins A and E have always attracted the greatest interest in analytical post-control of the vitamin contents of the feed mixture - the average results of the present tests show approximately 20 percentage points better recovery for sprayed vitamin A and approx. 15 percentage points for vitamin E.

The improved recovery percentages for the vitamins after spraying are naturally of importance for the animals' vitamin supply, and they are not without significance in relation to the feed control authorities. However, the most important acknowledgement is that the vitamin dosing by liquid spraying can be reduced without reducing the animals' supply of the added vitamins.

### The storage stability

The recovery percentages for vitamins added via dry vitamin premixes or sprayed on cooled pellets immediately after production can not stand alone - the storage durability of the vitamins is of great importance both for the feed industry and the animal breeder.

To follow up on this, samples were taken of a number of the tested feed portions after storage for 2, 4 and 6 weeks in a feed silo. The relatively short storage time is considered to be appropriate for most of the feed mixtures used in modern animal breeding.

**Table 2: Storage stability of vitamins in feed pellets. Percentage recovery after pelleting and 6 weeks storage in relation to meal product (natural vitamins) or declared additives (dry and liquid premix).**

| Index 100 = standard. Average of 4 productions. | | | | | | | | |
|---|---|---|---|---|---|---|---|---|
| | Feed pellets Natural vitamins | | Feed pellets with dry premix added, Index 100 | | Feed pellets with liquid premix added | | | |
| | | | | | ***Index 100*** | | ***Index 70*** | |
| | Production | 6 weeks | Production | 6 weeks | Production | 6 weeks | Production | 6 weeks |
| Vitamin-A, i.u./g | 280/100 | 280/100 | 58 | 59 | 79 | 65 | 79 | 74 |
| Vitamin-E, mg/kg | 112 | 101 | 68 | 65 | 79 | 96 | 84 | 76 |
| Vitamin-K₃, mg/kg | 120 | 44 | 4 | 0/23 | 48 | 4 | 35 | 6 |
| Vitamin-B₁, mg/kg | 91 | 108 | 51 | 36 | 84 | 25 | 110 | 25 |
| Vitamin-B₂, mg/kg | 114 | 117 | 43 | 38 | 67 | 95 | 66/226 | 54/187 |
| Vitamin-B₆, mg/kg | 130 | 88 | 33 | 51 | 82 | 88 | 79 | 70 |
| Vitamin-B₁₂, mg/kg | 142 | 98 | 17 | 30 | 76 | 50 | 58 | 48 |
| Niacin, mg/kg | 102 | 103 | 48 | 55 | 84 | 67 | 90 | 75 |
| Pantothenic acid mg/kg | 92 | 88 | 57 | 68 | - | - | - | - |
| Biotin, mg/kg | 94 | 101 | 20 | 25 | 50 | 75 | 13/131 | 0 |

Table 2 shows recovery percentages for vitamins at production and after storage for 6 weeks. For feed pellets which only contain natural vitamins, the recovery in pellets is set in relation to the contents in the meal product. For the remaining mixtures, the recovery is expressed in relation to the guaranteed addition. Recovery after 2 and 4 weeks' storage is omitted out of regard for space, and because they do not influence the general tendency.

In general it can be ascertained that all naturally occurring vitamins would appear to have a greater storage stability.

Vitamin A shows a slight storage loss after spraying, but the loss is considerably less than expected. For the vitamins E, B₂ and B₆, there is no systematic storage loss, and pantothenic acid added via dry premix and in natural form appears to be very stable. Pantenol applied via liquid premix can also be assumed to be a stable vitamin. The vitamin K₃ retained after liquid application is quickly reduced during storage and it approaches 0 at 4 weeks' storage, but the amounts shown were found upon analysis after 6 weeks. For vitamin B₁ there is great storage stability for natural vitamin. During the storage period, the high recovery level after spraying falls down to the same level as found with dry vitamin addition. For vitamin B₁₂, great difference is seen between the tests, both with regard to level and tendency. However, the amount of vitamin remaining after storage for 6 weeks will be considerably higher after liquid spraying than after dry addition. The result for niacin shows a tendency towards greater loss with liquid spraying than with dry addition, while the result for biotin hardly permits itself to be interpreted due to the great variation in data. A guarded interpretation could be that there is 20 to 30 percent remaining after 6 weeks regardless of the method of application.

The general result of the storage test is that the storage stability remains the same regardless of the method of application. The exceptions are vitamin K₃, B₁ and perhaps B₁₂, which after liquid spraying shows some decrease. However, the contents of these vitamins at the start of the storage test were considerably higher after liquid spraying than with dry addition. If there are to be reasonable amounts of vitamin K₃ and B₁ in the feed after liquid spraying, the feed must be used within 2 to 4 weeks after production.

The tests carried out show a surprisingly great process loss of all vitamins added to the feed via dry vitamin premix. The lacking vitamin recovery starts already after admixture with the meal product. A number of vitamins lose further activity during expansion, and there is a tendency towards continued loss during the subsequent pelleting. In feed pellets, the average recovery for added vitamin E and pantothenic acid is highest with approx. 70 percent, while the recovery percentages for the remaining vitamins lie a good 50 to approx. 25 percent down. Vitamin K₃ is particular in that it more or less disappears.

The average recovery percentages for vitamins sprayed on feed pellets after cooling lies from 15 to 60 percentage points higher than for vitamins added in the form of dry vitamin premix (table 1).

Since at the same time the storage stability for the vitamins with up to 4 weeks' storage of the feed mixtures is generally the same regardless of the method of application, the animals are provided with considerably higher amounts of vitamin at the same vitamin dosing to the feed when the vitamins are sprayed on as liquid premix.

The content of natural B vitamins proves to be extremely stable during processing, and even with a tendency towards increasing content during the feed production process. With the content level taken into consideration, it is not curious that a feed mixture seldom or never falls at the post-control for the content of B vitamins. The same applies to a considerable extent regarding vitamin E. Vitamin A and especially vitamin K₃ do not have this natural back-up, and since both vitamins in synthetic form are somewhat or very sensitive to processing, it is obvious that post-control here will reveal many failures.

The recovery percentages in pellets for vitamins added via dry vitamin premixes show that there is a very poor correlation between the declared vitamin content (added) in the feed mixtures and that amount which reaches the animals. The relationship is considerably better when the pellets are sprayed with vitamins. In light of this, it was natural to carry out an investigation into whether the animals in production tests reacted to reduced vitamin addition via liquid premix sprayed on the cooled feed pellets.

The results of the production tests showed that porkers did not react to a reduction of vitamin allocation via liquid spraying of 60 percent of the prescribed dry vitamin addition.

The tests performed show that a considerably higher percentage of the added vitamins reach the animals when the vitamin premix is sprayed on the finished feed or dosed via the drinking water. Consequently, due to the elimination of the process loss, the animals' vitamin requirements can be covered with a smaller addition of vitamins after pelleting.

The concept involves the addition of phytase enzyme to expanded/pelleted poultry feeds and pig feeds. When the enzyme is sprayed on cooled feed pellets together with the vitamin premix, the full enzyme activity is retained, which gives rise to the release of 60 to 70 percent of the organically-bound phosphor in vegetable feed raw materials. Furthermore, smaller amounts of amino acids, carbohydrates and micro-minerals are released. As a consequence of the use of enzymes and reduced dosing of mineral phosphate, it is expected that the concentration of phosphor in the manure and the discharge to the environment can be reduced by 20 to 25 percent.

The micro-minerals in a liquid micro-mineral mixture are 100 percent dissolved, the result being that the accessibility to and the absorption by the animals is greater than with the use of traditional salts. As a consequence, the dosing of micro-minerals to industrially-produced feeds can be reduced, with subsequently less discharge to the environment.

The new products can be delivered in packaging which can be handled by truck, and the products are conveyed from the packaging to the spraying equipment in the feed mill through closed piping systems. This results in considerable advantages for the animal feed industry, both with regard to handling as well as the working environment.

## Claims

1. A method for the mixing of a vitamin premix for the production of animal feed pellets with the addition of said premix, where the premix is a vitamin premix comprising fat/oil- and water-soluble vitamins, where the feed pellets are sprayed with the vitamin premix, and where the pellets are subjected to cooling before being sprayed, **characterized in that** the water phase for the water-soluble vitamins comprises a mix of propylene glycol and EDTA and nicotinamide, or carbamide/urea, after which a vitamin B₂, such as riboflavin, is added, and thereafter sodium hydroxide (NaOH).

2. A method according to daim 1, **characterized in that** hydrochloric acid (HCl) is also added, and that further vitamin Bs are subsequently added, mainly biotin and pyridoxine hydrochloride.

3. A method according to claims 1 and 2, **characterized in that** the oil phase comprises vitamins A, D and E, a solubilizer and also anti-oxidants, the mixing of which is carried out at a temperature interval of around 50-70°C, preferably at around 60°C.

4. A method according to claim 1, **characterized in that** the oil phase and the water phase are mixed together while being stirred, and that the temperature of the water phase is 35-45°C.

5. A method according to claims 1-4, **characterized in that** a phytase enzyme is added to the vitamin premix, said premix preferably having a temperature of 20-30°C.

## Patentansprüche

1. Verfahren zum Mischen einer Vitaminvormischung für die Herstellung von Tierfutterpellets unter Zugabe dieser Vormischung, wobei die Vormischung in einer Vitaminvormischung mit fett/öl- und wasserlöslichen Vitaminen besteht, wobei die Futterpellets mit der Vitaminvormischung besprüht werden und die Pellets einer Kühlung unterzogen werden, bevor sie besprüht werden, **dadurch gekennzeichnet, daß** die Wasserphase für die wasserlöslichen Vitamine eine Mischung von Propylenglykol und EDTA und Nikotinamid, oder Carbamid/Harnstoff aufweist, wonach ein Vitamin B₂, wie z.B. Riboflavin, und anschließend Natriumhydroxid (NaOH) zugegeben wird.

2. Verfahren nach Anspruch 1, **dadurch gekennzeichnet, daß** außerdem Salzsäure (HCl) zugegeben wird, und anschließend ferner Vitamine B, vorwiegend Biotin und Pyridoxin-Chlorhydrat zugegeben werden.

3. Verfahren nach Anspruch 1 und 2, **dadurch gekennzeichnet, daß** die Öl-phase Vitamine A, D und E, ein Auflösungsmittel und auch Antioxidationsmittel aufweist, deren Mischung in einem Temperaturbereich von 50-70°C, vorzugsweise bei etwa 60°C, durchgeführt wird.

4. Verfahren nach Anspruch 1, **dadurch gekennzeichnet, daß** die Ölphase und die Wasserphase unter Rühren miteinander vermischt werden, und daß die Temperatur der Wasserphase 35-45°C beträgt.

5. Verfahren nach Anspruch 1 bis 4, **dadurch gekennzeichnet, daß** ein Phytase-Enzym zu der Vitaminvormischung zugegeben wird, wobei die Vormischung vorzugsweise eine Temperatur von 20-30°C aufweist.

## Revendications

1. Procédé de mélange d'un pré-mélange de vitamines pour la production de granules d'aliments pour animaux avec l'addition dudit pré-mélange, où le pré-mélange est un pré-mélange de vitamines comprenant des vitamines solubles dans les matières grasses/l'huile et dans l'eau, où les granules d'aliments pour animaux sont pulvérisés du pré-mélange de vitamines, et où les granules sont soumis à un refroidissement avant d'être pulvérisés, **caractérisé en ce que** la phase aqueuse pour les vitamines solubles dans l'eau comprend un mélange de propylèneglycol et d'EDTA et de nicotinamide, ou de carbamide/urée, après quoi une vitamine B₂, telle que la riboflavine, est ajoutée, et après ceci de l'hydroxyde de sodium (NaOH).

2. Procédé selon la revendication 1, **caractérisé en ce que** de l'acide chlorhydrique (HCl) est également ajouté, et **en ce que** davantage de vitamines B sont ensuite ajoutées, principalement de la biotine et du chlorhydrate de pyridoxine.

3. Procédé selon les revendications 1 et 2, **caractérisé en ce que** la phase huileuse comprend des vitamines A, D et E, un solubilisant ainsi que des antioxydants, dont le mélange est réalisé à un intervalle de températures d'environ 50 à 70°, de préférence à environ 60°.

4. Procédé selon la revendication 1, **caractérisé en ce que** la phase huileuse et la phase aqueuse sont mélangées ensemble sous agitation, et **en ce que** la température de la phase aqueuse est de 35 à 45°C.

5. Procédé selon l'une quelconque des revendications 1 à 4, **caractérisé en ce qu'**une enzyme phytase est ajoutée au pré-mélange de vitamines, ledit pré-mélange ayant de préférence une température de 20 à 30°C.
